# EUROPÄISCHE PATENTSCHRIFT

(11) **EP 2 692 584 B1**
(45) Veröffentlichungstag und Bekanntmachung des Hinweises auf die Patenterteilung: **27.05.2015**
(21) Anmeldenummer: 13174694.3
(22) Anmeldetag: 02.07.2013
(51) Int. Cl.: B60R 1/00

(54) **Spiegelersatzsystem für ein Fahrzeug**
Mirror substitute system for a vehicle
Système de remplacement de rétroviseur pour véhicule

(30) Priorität: 03.08.2012 DE 102012015398
(43) Veröffentlichungstag der Anmeldung: 05.02.2014
(73) Patentinhaber: MEKRA Lang GmbH & Co. KG, 91465 Ergersheim (DE)
(72) Erfinder: Lang, Dr. Werner, 91465 Ergersheim (DE); Kunz, Manuel, 97285 Röttingen (DE); Geißendörfer, Peter, 91465 Ergersheim (DE); Witzke, Michael, 91522 Ansbach (DE); Hornung, Michael, 91465 Ergersheim (DE); Centmayer, Stefan, 91465 Ergersheim (DE)
(74) Vertreter: Kramer Barske Schmidtchen Patentanwälte PartG mbB

(56) Entgegenhaltungen:
- WO-A1-2011/061238
- DE-A1- 10 356 144
- DE-U1-202011 005 102
- US-A1- 2003 122 930
- US-A1- 2011 317 049

## Beschreibung

Die vorliegende Erfindung betrifft ein Spiegelersatzsystem für ein Fahrzeug, insbesondere ein Nutzfahrzeug.

Bei Kraftfahrzeugen sind abhängig von dem Typ des Kraftfahrzeugs, wie beispielsweise Krafträdern, Kraftfahrzeugen zur Personenbeförderung, Kraftfahrzeugen zur Güterbeförderung, usw. sogenannte Sichtfelder gesetzlich vorgegeben, welche durch eine Einrichtung für indirekte Sicht, herkömmlicher Weise einen Spiegel, abgebildet werden müssen und durch den auf einem Fahrersitz sitzenden Fahrer jederzeit über die Einrichtung für indirekte Sicht einsehbar sein müssen. In Abhängigkeit vom Typ des Fahrzeugs und insbesondere davon, welche Bereiche rund um das Fahrzeug vom Fahrer direkt eingesehen werden könne, verlangen in Abhängigkeit vom Fahrzeugstyp unterschiedliche gesetzliche Vorschriften, dass bestimmte Sichtfelder mittels der Einrichtungen für indirekte Sicht jederzeit, dauerhaft und zuverlässig eingesehen werden können.

So ist für Nutzfahrzeuge, wie beispielsweise LKWs oder Lieferwagen, derzeit beispielsweise als Einrichtung zur indirekten Sicht ein Hauptspiegel auf jeweils der Fahrerseite und der Beifahrerseite vorgesehen, mit welchem der Fahrzeugführer einen ebenen und horizontalen Teil der Fahrbahn von bestimmter Breite einsehen kann, der sich ab einer festgelegten Entfernung hinter den Augenpunkten des Fahrzeugsführers bis zum Horizont erstreckt. Ein Streifen geringerer Breite ist ebenfalls mittels dieser Spiegel für den Fahrzeugführer einsehbar, der jedoch bereits in kürzerer Entfernung hinter den Augenpunkten des Fahrers beginnt. Solche gesetzlich vorgeschriebenen Bereiche, die jederzeit und dauerhaft von Fahrer unter Verwendung der Einrichtungen zur indirekten Sicht einsehbar sein müssen, werden als Sichtfelder bezeichnet.

In letzter Zeit ist es zunehmend angedacht, neben herkömmlichen Spiegeln als Einrichtungen zur indirekten Sicht entweder in Ergänzung oder als Ersatz für die Spiegel Kamerasysteme als Einrichtungen zur indirekten Sicht einzusetzen, bei denen eine Bildsensoreinrichtung ein Bild kontinuierlich erfasst, diese von der Bildaufnahmeeinheit erfassten (Video-)Daten, beispielsweise mittels einer Versorgungseinheit und gegebenenfalls nach Weiterbearbeitung, an eine im Fahrerhaus befindliche Anzeigeeinrichtung geliefert werden, welche für den Fahrer dauerhaft und jederzeit einsehbar das entsprechend gesetzlich geforderte Sichtfeld oder mehrere Sichtfel der und ggf. ergänzende Information, wie z.B. Kollisionshinweise, Abstände und Ähnliches, für den Bereich rund um das Fahrzeug darstellt.

Derzeit werden solche auf Kameraeinsatz beruhenden Spiegelersatzsysteme hauptsächlich für PKW und dort für den Rückwärtsfahrtbereich eingesetzt, wobei die Bildaufnahmeeinheit im Wesentlichen ohne Abstand direkt mit der Karosserie des Fahrzeugs verbunden ist. Die durch den Kameraeinsatz gewonnene Information wird meist ergänzend zu den herkömmlich verwendeten Spiegeln geliefert.

Aus der DE 10 2005 028 144 A1 ist eine Kameraanordnung mit einer Bildsensorabdichtung gegen Umwelteinflüsse bekannt. Die Kameraanordnung weist ein Außengehäuse und einen auf einem Elektronikträger aufgebrachten Bildsensor auf, wobei das Außengehäuse einen Optikabschnitt mit mindestens einer in den Optikabschnitt eingebrachten Bildgebungsoptik aufweist. Der Optikabschnitt ist mediendicht gegen den Elektronikträger abgedichtet, wobei ein den Bildsensor aufnehmender, mediendichter Sensorraum ausgebildet ist.

Aus der US 2004/0036768 A1 ist eine Rückblickkamera für ein Fahrzeug bekannt, die einen Kamerakörper und eine Linse enthält. Der Kamerakörper ist an einer Montagebasis, die die Kamera hält, angebracht. Die Montagebasis kann angepasst sein, dass sie extern oder intern an dem Fahrzeug montierbar ist, und ein Montagewinkel der Montagebasis zeigt in einer Richtung nach unten. Eine Dichtung kann verwendet werden, um die Kamera gegenüber der Rückwand des Fahrzeugs zu dichten.

Aus der DE 695 09 040 T2 ist eine Rückblickeinrichtung für Fahrzeuge bekannt, die eine Mikrokamera und eine Steuereinheit für die Mikrokamera aufweist. Die Mikrokamera und die Steuereinheit sind jeweils in getrennten Gehäusen vorgesehen. Die Steuereinheit erfüllt die Funktionen der Leistungsversorgung der Mikrokamera und der Übertragung des von letzterer erzeugten Signals an den Monitor.

DE 20 2011 005 102 U1 beschreibt optische Sensorsysteme für automotive Anwendung, wobei die Merkmale des Oberbegriffs des Anspruchs 1 offenbart werden. Ein Signal eines Kamerasensors wird mittels eines Treibers an eine Empfängerplatine gesendet, die im Abstand zum optischen Sensor an einer beliebigen Position im Fahrzeug angebracht sein kann. Die Empfängerplatine ist mit einer Bildauswertungsplatine verbunden. Auf der Bildauswertungsplatine findet die Auswertung der Bilddaten mit einer geeigneten Software statt und die Bilddaten werden vorverarbeitet. Die verarbeiteten Daten werden dann an ein Display im Fahrzeug geschickt.

Wenn Kamerasysteme als Spiegelersatz verwenden werden sollen, sind gesetzlich hohe Anforderungen zu erwarten, was sich nicht nur auf die dauerhafte und jederzeit einsehbare Darstellung bezieht, sondern auch darauf, mit welcher Bildqualität und Bildauflösung die Bilder im Fahrerhaus auf der Anzeigeeinrichtung dargestellt werden müssen, um für das menschliche Auge entsprechend den Darstellungen in einem Spiegel wahrnehmbar zu sein und möglichst den Fahrer nicht zu verwirren. Insbesondere für den Ersatz von Weitwinkelspiegeln ist eine zusätzliche Herausforderung, einen ausreichenden Bildauflösung Öffnungswinkel des Bildes sicherzustellen, während gleichzeitig der gesamte durch den Weitwinkelspiegel herkömmlicher Weise einsehbare Bereich und das entsprechende zugehörige Sichtfeld dargestellt wird. Für den Ersatz eines Hauptspiegels ist es dagegen wesentlich, eine ausreichend hohe Auflösung des Bildes zu gewährleisten. Diese Anforderungen sind mit herkömmlichen Systemen, bei denen die Bildaufnahmeeinheit und eine zugeordnete Steuereinheit/Versorgungseinheit getrennt voneinander derart vorgesehen sind, dass die Steuereinheit/Versorgungseinheit im Fahrzeuginnenraum liegt und die Bildaufnahmeeinheit außerhalb des Fahrzeugs, in der Regel an dessen Karosserie, aufgrund der hohen zu übertragenden Datenmengen beim Bereitstellen von ausreichender Bildauflösung kaum realisierbar. Alternativ sind derzeit die Versorgungseinheit und die Bildaufnahmeeinheit in einem gedichteten Gehäuse zusammengefasst, das im Außenbereich des Fahrzeugs montiert ist und somit für sowohl die Bildaufnahmeeinheit als auch die Versorgungseinheit höchste Dichtigkeitsanforderungen, insbesondere im Hinblick auf die Bildaufnahmeeinheit, gewährleisten muss.

Davon ausgehend ist es Aufgabe der Erfindung, ein Spiegelersatzsystem für ein Fahrzeug bereitzustellen, das hinsichtlich der Auflösung der Daten und der Einsicht in die gesetzlich vorgeschriebenen Sichtfelder als Speiegelersatzsystem beispielsweise für Haupt- und Weitwinkelspiegel eines Nutzfahrzeugs dienen kann und gleichzeitig leicht baut und kostengünstig herstellbar ist.

Diese Aufgabe wird mit einem Spiegelersatzsystem mit den Merkmalen des Anspruchs 1 gelöst.

Bevorzugte Ausführungsformen sind in den abhängigen Ansprüchen angegeben.

Der Erfindung liegt der Gedanke zugrunde, ein Spiegelersatzsystem für ein Fahrzeug vorzusehen, das neben einer Bildaufnahmeeinheit, eine Versorgungseinheit und eine Wiedergabeeinheit enthält. Dadurch, dass die Bildaufnahmeeinheit und die Versorgungseinheit in einem gemeinsamen Gehäuse, jedoch in bezüglich ihrer Abdichtung von einander getrennten Bauräumen angeordnet sind, aber auch die Versorgungseinheit außerhalb der Wiedergabeeinheit angeordnet ist, ist es möglich, die an die Wiedergabeeinheit zu übertragende Datenmenge, d.h. insbesondere die Datenmenge, die von einem Bereich außerhalb der Karosserie des Fahrzeugs in den Innenraum des Fahrzeugs übertragen werden muss, zu reduzieren, indem die Versorgungseinheit nahe bei der Bildaufnahmeeinheit, vorzugsweise außerhalb der Karosserie des Fahrzeugs, angeordnet wird. Dadurch, dass im gemeinsamen Gahäuse zusätzlich getrennte abgedichtete Bauräume für die Bildaufnahmeeinheit und die Versorgungseinheit vorgesehen sind, ist es möglich, nur die Bildaufnahmeeinheit in einem Bauraum und einem entsprechenden Gehäuse unterzubringen, das höchsten Dichtigkeitsanforderungen, nämlich Wasserdampfdichtheit, genügt, während die Versorgungseinheit in einem Gehäuse mit geringen Dichtigkeitsanforderungen untergebracht sein kann, das ausschließlich Dichtigkeitsanforderungen genügt, die für den Funktionsschutz der elektrischen Bauteile ausreichend sind. Durch die Reduzierung der Dichtigkeitsanforderungen an das Gehäuse bzw. den Bauraum der Versorgungseinheit ist somit eine Verwendung von Kunststoff oder anderen Leichtbaustoffen, wie z.B. beschichteten Kunststoffen, anstelle von Metall möglich, was zu Gewichts- und Kostenersparnis führt.

Außerdem kann das erfindungsgemäße Spiegelersatzsystem günstig auch in Bauräumen untergebracht werden, die von der Karosserie des Fahrzeugs verhältnismäßig weit beabstandet sind, wie beispielsweise in einem sich von der Karosserie nach außen erstreckenden Kameraarm. Auch hier müssen aufgrund der vorteilhaften Ausgestaltung von insbesondere der Bildaufnahmeeinheit und der Versorgungseinheit und deren Gehäusen keine großen Datenmengen über lange Strecken in das Innere des Fahrzeugs zur Wiedergabeeinheit übertragen werden und diese Baugruppen können vorteilhaft in beispielsweise dem Kameraarm untergebracht werden. Die Möglichkeit der Verwendung eines solchen Kameraarm führt dazu, dass auch gesetzlich vorgeschriebene Sichtfelder von Hauptspiegel und Weitwinkelspiegel (Sichtfeld II bzw. Sichtfeld IV) von der Bildaufnahmeeinheit erfasst werden können und, insbesondere bei Verwendung eines digitalen Bildsensors, mit ausreichend hoher Auflösung auf der Wiedergabeeinheit im Innenraum des Fahrzeugs dargestellt werden können, da die Bildaufnahmeeinheit ausreichend beabstandet zur Fahrzeugseitenwand bzw. der Fahrzeugkarosserie liegt und somit eine weniger extreme Weitwinkeleinrichtung als Bildaufnahmeeinrichtung verwendet werden kann, als es beim Anbringen der Bildaufnahmeeinheit direkt an der Karosserie der Fall wäre. Durch die erfindungsgemäße Ausgestaltung ist somit einerseits eine einfachere Datenübertragung zur Wiedergabeeinheit, beispielsweise einem Bildschirm oder einer Projektion auf Karosserieteile im Innenraum des Fahrzeugs, möglich, da nur eine reduzierte Datenmenge über weite Strecken übertragen werden muss und somit hohe Ansprüche an Kabel, Steckverbinder und elektronische Bauelemente zur Datenübertragung nur in verhältnismäßig kurzen Strecken erforderlich sind. Andererseits ermöglicht dies die Verwendung eines digitalen Kamerasystems und damit der Abbildung der gesetzlich vorgeschriebenen Sichtfelder mit ausreichend hoher Auflösung und von verhältnismäßig frei wählbarer Position am Fahrzeug aus, an der die Bildaufnahmeeinheit angebracht ist.

Nach einer bevorzugten Ausführungsform ist die Versorgungseinheit oder die Bildaufnahmeeinheit bzw. beide, Versorgungseinheit und Bildaufnahmeeinheit, angepasst, bereits eine Reduzierung der zu übertragenden Datenmenge durchzuführen, indem beispielsweise eine Videoverarbeitung zur Bildskalierung, durchgeführt wird, nicht erforderliche, aber durch die Bildaufnahmeeinheit erfasste Bereiche des Bildes abgeschnitten werden, die Datenmenge mit herkömmlichen Kompressionsverfahren komprimiert wird und ähnliches. So kann die an die Wiedergabeeinheit zu übertragende Videodatenmenge bereits nahe an ihrem Entstehungsort verringert werden, was wiederum die Anforderungen an die zur Übertragung verwendeten Bauteile reduziert.

Nach einer weiter bevorzugten Ausführungsform sind die Versorgungseinheit und/oder die Bildaufnahmeeinheit ferner angepasst, weitere Videobe- und -verarbeitungen durchzuführen, wie beispielsweise eine Bildauswertung zur Fahrerassistenz, eine Bildzusammenstellung der auf der Wiedergabeeinheit im Fahrzeuginnenraum wiederzugebenden Darstellung, Weißabgleich, und Kombinationen davon, was wiederum dazu führt, dass nur die tatsächlich auf der Wiedergabeeinheit dargestellten Daten von einem Bereich außerhalb des Fahrzeugs in den Bereich innerhalb des Fahrzeugs zu übertragen sind, wenn die Bildaufnahmeeinheit und die Versorgungseinheit in getrennten Gehäusen, aber außerhalb des Fahrzeugs angeordnet sind. Außerdem kann die Bildaufnahmeeinheit und/oder die Versorgungseinheit angepasst sein, weitere Videoverarbeitungen durchzuführen, wie beispielsweise eine Selbsterkennung von Verschmutzung, ggf. mit einem Auslösen von einem Reinigungsvorgang durch entsprechende Steuerung und ähnliches.

Erfindungsgemäß sind die Bildaufnahmeeinheit und die Versorgungseinheit in unmittelbarer Nähe zueinander angeordnet, d.h. in einem gemeinsamen Gehäuse, beispielweise in einem Kameraarm bzw. Kameragehäuse. Das in unmittelbarer Nähe Anordnen der Bildaufnahmeeinheit und der Versorgungseinheit verringert die Strecke, über die hohe Datenmengen zu übertragen sind, was wiederum zu verringerten Anforderungen hinsichtlich der elektrischen Bauteile, wie Kabel, Stecker, usw. führt.

Die Versorgungseinheit und die Bildaufnahmeeinheit sind in einem gemeinsamen Gehäuse angeordnet, das jedoch lediglich zum Bilden einer Baugruppe dient und nicht hinsichtlich Dichtigkeit ausschlaggebend ist, da sowohl die Bildaufnahmeeinheit als auch die Versorgungseinheit in jeweils für den entsprechenden Bedarf gedichteten Gehäusen untergebracht sind. Beispielsweise kann ein solches gemeinsames Gehäuse ein Kameraarm oder ein Kameragehäuse sein.

Nach einer bevorzugten Ausführungsform ist die Bildaufnahmeeinheit in einem wasserdampfdichten Gehäuse, vorzugsweise in einem metallischen Gehäuse, angeordnet. Damit können die hohen Dichtigkeitsanforderungen an das Gehäuse der Bildaufnahmeeinheit erfüllt werden. Gleichzeitig ist es nicht erforderlich, auch die Versorgungseinheit entsprechend stark zu dichten, so dass als Gehäuse für die Versorgungseinheit vorzugsweise ein verhältnismäßig leichtes Kunststoffgehäuse eingesetzt wird, was zu einer Gewichts- und Kostenersparnis gegenüber einem metallischen Gehäuse führt. Durch die Kombination eines metallischen Gehäuses für die Bildaufnahmeeinheit und eines Kunststoffgehäuses für die Versorgungseinheit ist somit eine Kostenersparnis und Gewichtsersparnis ohne Einbußen bezüglich der erforderlichen Dichtigkeit möglich.

Nach einer weiter bevorzugten Ausführungsform sind eine oder mehrere Bildaufnahmeeinheiten vorhanden. Insbesondere ist es beispielsweise denkbar, dass eine Bildaufnahmeeinheit zur Aufnahme des einem Hauptspiegel entsprechenden Bilds (Sichtfeld II) und eine Bildaufnahmeeinheit zur Aufnahme eines einem Weitwinkelspiegel entsprechenden Bilds (Sichtfeld IV) vorgesehen wird. Diese mehreren Bildaufnahmeeinheiten sind bevorzugt mit einer gemeinsamen Versorgungseinheit oder aber alternativ mit mehreren einzelnen, zugeordneten Versorgungseinheiten verbunden sind. Vorzugsweise sind bei Verwendung von mehreren Bildaufnahmeeinheiten diese mit einer gemeinsamen Versorgungseinheit gekoppelt, welche die Bildaufnahmeeinheiten steuert und die Videoverarbeitung der erfassten Daten durchführt, so dass beispielsweise bereits in der Versorgungseinheit die Daten auf den unterschiedlichen Bildaufnahmeeinheiten zu einem gemeinsamen, auf der Wiedergabeeinheit wiederzugebenden Bild bzw. einer gemeinsamen Darstellung zusammengefasst werden können. Die mehreren Bildaufnahmeeinheiten können gleich abgebildet sein und z.B. nur unterschiedlich ausgerichtet sein und damit verschiedene Sichtbereiche erfassen, oder es können zueinander unterschiedliche Bildaufnahmeeinheiten nach Bedarf vorgesehen werden, z.B. was den Öffnungswinkel oder deren Auflösung betrifft.

Es ist auch möglich, mehrere Versorgungseinheiten für eine oder mehrere Bildaufnahmeeinheiten vorzusehen. In diesem Fall sind diese Versorgungseinheiten vorzugsweise derart angeordnet, dass sie als Redundanz füreinander dienen und somit funktionale Sicherheit des Systems bieten. Die Versorgungseinheit dient vorzugsweise zur Versorgung der einen oder mehreren Bildaufnahmeeinheiten hinsichtlich der Steuerung, Stromzufuhr und ähnlichen und empfängt aber auch von der einen oder den mehreren Bildaufnahmeeinheiten die Daten, verarbeitet diese und gibt diese zur Wiedergabeeinheit, beispielsweise einem Bildschirm oder einer Projektion, im Fahrzeuginnenraum weiter.

Da die Versorgungseinheit und die Bildaufnahmeeinheit in ein gemeinsames Gehäuse, wie beispielsweise ein Kameragehäuse oder einen Kameraarm, integriert sind, ist es auch möglich, in dieses gemeinsame Gehäuse zusätzliche funktionale Bauteile, wie beispielsweise Blinker, Antennen, Sensoren, wie beispielsweise einen Temperatursensor oder einen Abstandssensor, einen Diebstahlschutz, eine Aufzeichnungsfunktion (black box), eine Reinigungsfunktion der optischen Elemente und ähnliches zu integrieren. Diese Funktionsbauteile können wahlweise von der Versorgungseinheit oder aber von anderen Steuerbauteilen im Fahrzeug angesteuert sein.

Nach einer bevorzugten Ausführungsform ist in die Bildaufnahmeeinheit ein Heizelement integriert, das weiter vorzugsweise durch die Versorgungseinheit gesteuert wird. Vorzugsweise ist in diesem Fall die Versorgungseinheit mit einem Temperaturerfassungsmittel bzw. mit Fahrzeugssteuerungselementen gekoppelt, welche in Abhängigkeit von der Umgebungstemperatur ein Steuersignal an die Versorgungseinheit ausgeben, dass die optischen Elemente der Bildaufnahmeeinheit, insbesondere beispielsweise Objetiv- oder Frontglas, zu beheizen sind. Alternativ kann die Beheizung auch beispielsweise an Fahrzeugsteuerungselemente, wie eine Standheizung, eine Fernbedienung einer Schließanlage eines Fahrzeugs, die Zentralverriegelung oder andere Steuerelemente für Fahrzeugsignale gekoppelt sein.

Nach einer bevorzugten Ausführungsform sind die Fahrzeugsfunktionsbauteile, die Versorgungseinheit und die Bildaufnahmeeinheit in einem gemeinsamen Gehäuse angeordnet. Nachfolgend wird die Erfindung beispielhaft anhand der beigefügten Figuren beschrieben, in denen:
- Fig. 1: in perspektivischer Ansicht das Führerhaus eines Nutzfahrzeugs, betrachtet in einer Blickrichtung von hinten nach vorne, zeigt, wobei das Führerhaus einen Kameraarm mit einem erfindungsgemäßen Spiegelersatzsystem trägt;
- Fig. 2: eine vergrößerte Darstellung eines Teilbereichs von Fig. 1 ist; und
- Fig. 3: schematisch das erfindungsgemäße Spiegelersatzsystem zeigt.

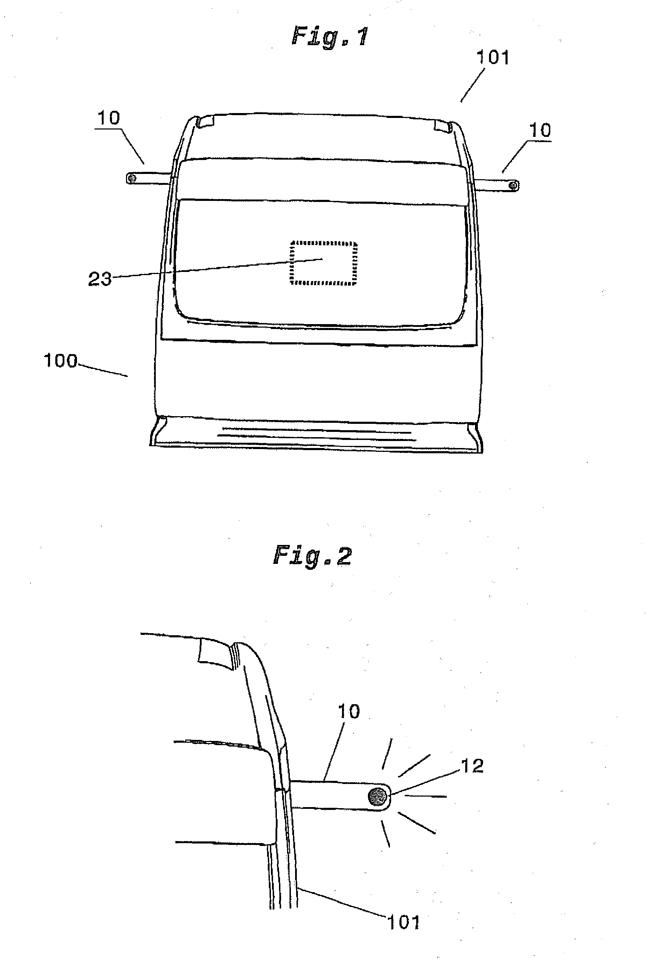

Fig. 1 zeigt in einer perspektivischen Ansicht mit einer Blickrichtung von hinten nach vorne eine Fahrerkabine 101 eines Nutzfahrzeugs 100. An der Fahrerkabine 101 ist auf der rechten Seite und auf der linken Seite jeweils ein Kameraarm 10 vorgesehen, der seitlich nach außen herausragt. Statt des Kameraarms 10 kann grundsätzlich auch jede andere Art von Kamera oder Kameragehäuse vorgesehen werden, d.h. es sind selbstverständlich auch Bauteile denkbar, die nicht einen deutlichen Abstand zum Fahrzeug 100, insbesondere dessen Außenwand, herstellen, wie es der Kameraarm 10 macht.

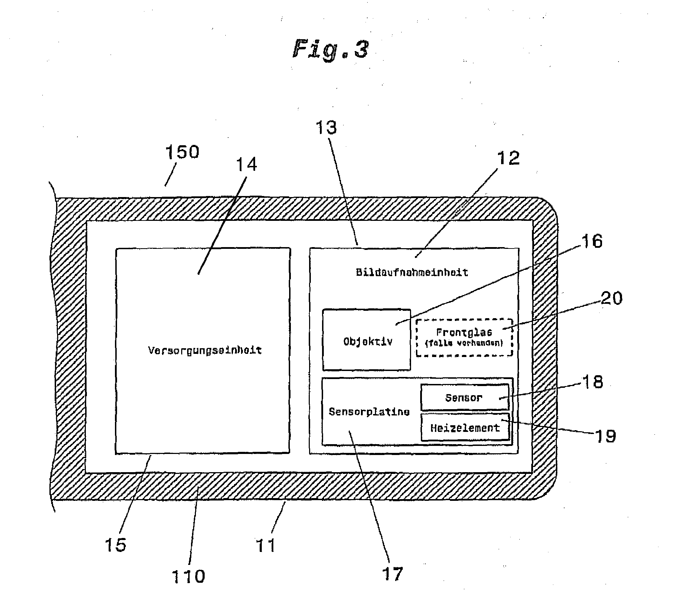

Der Kameraarm 10 bildet ein gemeinsames Gehäuse 11 (siehe Fig. 3), in das eine Bildaufnahmeeinheit 12 und eine Versorgungseinheit 14 aufgenommen sind.

Wie es in Fig. 3 erkennbar ist, sind die Bildaufnahmeeinheit 12 und die Versorgungseinheit 14, welche zur Steuerung und Versorgung der Bildaufnahmeeinheit 12 dient, in voneinander getrennten Bauräumen bzw. Gehäusen 13, 15 angeordnet, die jedoch beide in das Kameragehäuse 11 integriert sind und außerhalb von insbesondere einer in Fig. 1 dargestellten Wiedergabeeinheit 23 angeordnet sind, die im Inneren der Fahrerkabine 101 des Nutzfahrzeugs positioniert und durch den Fahrer jederzeit einsehbar ist.

Das Gehäuse 13 der Bildaufnahmeeinheit ist ein metallisches Gehäuse das hinsichtlich der Dichtigkeit höchsten Anforderungen, wie insbesondere einer Wasserdampfdichtheit, genügt, so dass die im Gehäuse 13 der Bildaufnahmeeinheit 12 angeordneten optischen Bauelemente, wie ein Objektiv 16 und beispielsweise eine Sensorplatine 17 mit einem Sensor 18 und einem Heizelement 19, zuverlässig gegen Wasserdampf und andere Verschmutzungen bzw. Feuchtigkeit geschützt sind. Wenn, wie in Fig. 3 dargestellt, ein Frontglas 20 für das Objektiv 16 vorhanden ist, so ist dieses selbstverständlich in das metallische Gehäuse 13 der Bildaufnahmeeinheit 12 derart integriert, dass die Dichtigkeitsanforderungen bzgl. des Gehäuses 13 ebenfalls erfüllt sind.

Die Versorgungseinheit 14 für die Bildaufnahmeeinheit 12 kann in einem Kunststoffgehäuse 15 oder einem anderen leicht bauenden Gehäuse untergebracht sein.

Die Versorgungseinheit 14 ist sowohl mit der Bildaufnahmeeinheit 12 als auch mit der Wiedergabeeinheit im Fahrzeuginnenraum gekoppelt und versorgt einerseits die Bildaufnahmeeinheit 12 mit Steuersignalen. Andererseits empfängt sie von der Bildaufnahmeeinheit 12 die aufgenommenen Daten und Videobilder, welche durch die Versorgungseinheit 14 verarbeitet werden, insbesondere zur Reduzierung der Datenmenge, aber auch zur Vorbereitung der Darstellung auf der Wiedergabeeinheit. Insbesondere führt die Versorgungseinheit neben der Reduzierung der Datenmenge auch eine Datenbearbeitung derart durch, dass beispielsweise eine Bildskalierung geschieht, eine Bildauswertung zur Fahrerassistenz vorgenommen werden kann, wobei der Fahrer beispielsweise auf Gefahren durch Farbcodes oder akustische Signale hingewiesen wird, und ähnliches.

Das in der Bildaufnahmeeinheit 12 integrierte Heizelement 19 wird in der in Fig. 3 dargestellten Ausführungsform durch einen ebenfalls in der Bildaufnahmeeinheit 12 integrierten Sensor 18, beispielsweise einen Temperatursensor, gesteuert. Wenn dieser eine entsprechend niedrige Temperatur erfasst, wird das Heizelement 19 derart angesteuert, dass es das Frontglas 20 und/oder Objektiv 16 heizt. Statt den Sensor 18 in der Bildaufnahmeeinheit 12 anzuordnen, könnte der Sensor 18 alternativ auch im gemeinsamen Gehäuse 11 der Versorgungseinheit 14 und der Bildaufnahmeeinheit 12 angeordnet sein oder außerhalb davon. Statt des Temperatursensors 18 könnte das Heizelement 19 auch in Abhängigkeit von durch andere Sensoren erfasste Zustände gesteuert werden, wie beispielsweise in Abhängigkeit von Daten von Sensoren, welche den Betrieb der Standheizung erfassen, welche die Betätigung einer Zentralverriegelung erfassen und ähnliches.

Dadurch dass die Versorgungseinheit 14 eine wesentliche Videoverarbeitung des durch die Bildaufnahmeeinheit 12 erfassten Videobilds durchführt, sind die von der Versorgungseinheit 14 an die Wiedergabeeinheit 13 in der Fahrerkabine 101 zu übertragenden Daten verhältnismäßig wenig, so dass für die Übertragung im Hinblick auf die dazu benötigten elektrischen Bauteile verringerte Anforderungen vorliegen, im Vergleich zu der Übertragung zwischen der Bildaufnahmeeinheit 12 und der Versorgungseinheit 14, welche aber nur über kurze Strecken erfolgt. Damit ist es möglich, die Bildaufnahmeeinheit 12 und die Versorgungseinheit 14 auch deutlich außerhalb des Fahrzeugs anzuordnen, wie beispielsweise in einem seitlich abstehenden Kameraarm 10. Dadurch dass zusätzlich zu dem gemeinsamen Gehäuse getrennte Gehäuse im Hinblick auf die Dichtigkeitsanforderungen für die Bildaufnahmeeinheit 12 und die Versorgungseinheit 14 vorgesehen werden, ist dies jedoch möglich, ohne das Gewicht der Baugruppe deutlich zu erhöhen und damit die Kosten zu erhöhen.

### Bezugszeichenliste

- 10: Kameraarm
- 11: Gehäuse
- 12: Bildaufnahmeeinheit
- 13: Gehäuse
- 14: Versorgungseinheit
- 15: Gehäuse
- 16: Objektiv
- 17: Sensorplatine
- 18: Fahrzeugsteuerungselement (Sensor)
- 19: Heizelement
- 20: Frontglas für Objektiv
- 23: Wiedergabeeinheit
- 100: Nutzfahrzeug
- 101: Fahrzeugkabine
- 150: Spiegelersatzsystem

## Patentansprüche

1. Spiegelersatzsystem (150) für ein Fahrzeug mit
einer Bildaufnahmeeinheit (12),
einer Versorgungseinheit (14), und
einer Wiedergabeeinheit (23), die angepasst ist, im Fahrzeuginnenraum durch den Fahrer einsehbar angeordnet zu sein,
wobei die Versorgungseinheit (14) und/oder die Bildaufnahmeeinheit (12) angepasst ist, Videoverarbeitung der von der Bildaufnahmeeinheit (12) aufgenommenen Bilder zur Reduzierung der an die Wiedergabeeinheit (23) zu übertragenden Datenmenge durchzuführen;
wobei die Bildaufnahmeeinheit (12) und die Versorgungseinheit (14) in bezüglich ihrer Abdichtung voneinander getrennten Bauräumen (13, 15) angeordnet sind und jeweils getrennt von und außerhalb der Wiedergabeeinheit (23) angeordnet sind;
**dadurch gekennzeichnet, dass**
die Bildaufnahmeeinheit (12) und die Versorgungseinheit (14) in einem gemeinsamen Gehäuse (11) angeordnet sind.

2. Spiegelersatzsystem (150) nach Anspruch 1, wobei die Versorgungseinheit (14) und/oder Bildaufnahmeeinheit (12) angepasst ist, Videoverarbeitung zur Bildskalierung, Bildauswertung zur Fahrerassistenz, Bildzusammenstellung, Komprimierung, Weißabgleich, Selbsterkennung von Verschmutzung, Overlays und Kombinationen der vorstehenden Verarbeitungen durchzuführen.

3. Spiegelersatzsystem (150) nach einem der vorhergehenden Ansprüche, wobei die Bildaufnahmeeinheit (12) und die Versorgungseinheit (14) in unmittelbarer Nähe zueinander angeordnet sind.

4. Spiegelersatzsystem (150) nach einem der vorhergehenden Ansprüche, wobei die Bildaufnahmeeinheit (12) in einem wasserdampfdichten Gehäuse (13) angeordnet ist.

5. Spiegelersatzsystem (150) nach Anspruch 4, wobei die Bildaufnahmeeinheit (12) in einem metallischen Gehäuse (13) angeordnet ist.

6. Spiegelersatzsystem (150) nach einem der vorhergehenden Ansprüche, wobei die Versorgungseinheit (14) in einem Kunststoffgehäuse (150) angeordnet ist.

7. Spiegelersatzsystem (150) nach einem der vorhergehenden Ansprüche, wobei mehrere Bildaufnahmeeinheiten (12) vorgesehen sind.

8. Spiegelersatzsystem (150) nach einem der vorhergehenden Ansprüche, wobei mehrere Versorgungseinheiten (14) vorgesehen sind.

9. Spiegelersatzsystem (150) nach einem der vorhergehenden Ansprüche, wobei in die Bildaufnahmeeinheit (12) ein Heizelement (19) integriert ist, das durch die Versorgungseinheit (14) gesteuert wird und mit Temperaturerfassungs- und/oder Fahrzeugsteuerungselementen (18) gekoppelt ist.

10. Spiegelersatzsystem (150) nach einem der vorhergehenden Ansprüche, wobei die Versorgungseinheit (14) mit Fahrzeugfunktionsbauteilen gekoppelt ist.

11. Spiegelersatzsystem (150) nach Anspruch 10, wobei die Fahrzeugfunktionsbauteile, die Versorgungseinheit (14) und die Bildaufnahmeeinheit (12) in einem gemeinsamen Gehäuse (11) angeordnet sind.

12. Spiegelersatzsystem (150) nach einem der vorhergehenden Ansprüche, wobei die Versorgungseinheit (14) mit der Wiedergabeeinheit (23) gekoppelt ist und durch die Versorgungseinheit (14) und/oder Bildaufnahmeeinheit (12) bearbeitete Videodaten an die Wiedergabeeinheit (23) überträgt.

13. Spiegelersatzsystem (150) nach einem der vorhergehenden Ansprüche, wobei die Bildaufnahmeeinheit (12) ein digitaler Bildsensor ist.

## Claims

1. A mirror replacement system (150) for a vehicle, comprising
an image capturing unit (12),
a supply unit (14), and
a rendering unit (23) adapted to be arranged in the vehicle interior and visible for the driver,
wherein the supply unit (14) and/or the image capturing unit (12) are adapted to carry out video processing of the images captured by the image capturing unit (12) for reducing the data volume to be transmitted to the rendering unit (23);
wherein the image capturing unit (12) and the supply unit (14) are arranged in separate installation spaces (13, 15) with regard to sealing, and are respectively arranged separate from and outside of the rendering unit (23);
**characterized in that**
the image capturing unit (12) and the supply unit (14) are arranged in a common housing (11).

2. The mirror replacement system (150) according to claim 1, wherein the supply unit (14) and/or the image capturing unit (12) is/are adapted to carry out video processing for image scaling, image evaluation for driver assistance, image combination, compression, white balance, auto-recognition of filth, overlays and combination of the above-mentioned processing operations.

3. The mirror replacement system (150) according to one of the preceding claims, wherein the image capturing unit (12) and the supply unit (14) are arranged in close proximity to each other.

4. The mirror replacement system (150) according to one of the preceding claims, wherein the image capturing unit (12) is arranged within a steam-tight housing (13).

5. The mirror replacement system (150) according to claim 4, wherein the image capturing unit (12) is arranged within a metal housing (13).

6. The mirror replacement system (150) according to one of the preceding claims, wherein the supply unit (14) is arranged within a plastic housing (150).

7. The mirror replacement system (150) according to one of the preceding claims, wherein a plurality of image capturing units (12) are provided.

8. The mirror replacement system (150) according to one of the preceding claims, wherein a plurality of supply units (14) are provided.

9. The mirror replacement system (150) according to one of the preceding claims, wherein a heating element (19) is integrated in the image capturing unit (12), which heating element is controlled by the supply unit (14) and coupled with temperature monitoring and/or vehicle control elements (18).

10. The mirror replacement system (150) according to one of the preceding claims, wherein the supply unit (14) is coupled with functional components of the vehicle.

11. The mirror replacement system (150) according to claim 10, wherein the functional components of the vehicle, the supply unit (14), and the image capturing unit (12) are arranged in a common housing (11).

12. The mirror replacement system (150) according to one of the preceding claims, wherein the supply unit (14) is coupled with the rendering unit (23) and transmits video data processed by the supply unit (14) and/or the image capturing unit (12) to the rendering unit (23).

13. The mirror replacement system (150) according to one of the preceding claims, wherein the image capturing unit (12) is a digital image sensor.

## Revendications

1. Système de remplacement de rétroviseur (150) pour un véhicule, comportant
une unité d'enregistrement d'images (12),
une unité d'alimentation (14), et
une unité de reproduction (23), qui est apte à être disposée dans l'habitacle du véhicule d'une façon visible pour le conducteur,
dans lequel l'unité d'alimentation (14) et/ou l'unité d'enregistrement d'images (12) est apte à exécuter un traitement vidéo des images enregistrées par l'unité d'enregistrement d'images (12) en vue de réduire la quantité de données à transmettre à l'unité de reproduction (23);
dans lequel l'unité d'enregistrement d'images (12) et l'unité d'alimentation (14) sont disposées dans des espaces de montage (13, 15) séparés l'un de l'autre en ce qui concerne leur étanchéité et sont disposées chacune séparément de et à l'extérieur de l'unité de reproduction (23);
**caractérisé en ce que**
l'unité d'enregistrement d'images (12) et l'unité d'alimentation (14) sont disposées dans un boîtier commun (11).

2. Système de remplacement de rétroviseur (150) selon la revendication 1, dans lequel l'unité d'alimentation (14) et/ou l'unité d'enregistrement d'images (12) est apte à exécuter un traitement vidéo pour le redimensionnement d'image, l'analyse d'image pour assister le conducteur, la composition d'image, la compression, l'équilibrage de blancs, l'auto-reconnaissance de l'encrassement, les superpositions et des combinaisons des traitements précités.

3. Système de remplacement de rétroviseur (150) selon l'une quelconque des revendications précédentes, dans lequel l'unité d'enregistrement d'images (12) et l'unité d'alimentation (14) sont disposées à proximité immédiate l'une de l'autre.

4. Système de remplacement de rétroviseur (150) selon l'une quelconque des revendications précédentes, dans lequel l'unité d'enregistrement d'images (12) est disposée dans un boîtier étanche à la vapeur d'eau (13).

5. Système de remplacement de rétroviseur (150) selon la revendication 4, dans lequel l'unité d'enregistrement d'images (12) est disposée dans un boîtier métallique (13).

6. Système de remplacement de rétroviseur (150) selon l'une quelconque des revendications précédentes, dans lequel l'unité d'alimentation (14) est disposée dans un boîtier en matière plastique (150).

7. Système de remplacement de rétroviseur (150) selon l'une quelconque des revendications précédentes, dans lequel il est prévu plusieurs unités d'enregistrement d'images (12).

8. Système de remplacement de rétroviseur (150) selon l'une quelconque des revendications précédentes, dans lequel il est prévu plusieurs unités d'alimentation (14).

9. Système de remplacement de rétroviseur (150) selon l'une quelconque des revendications précédentes, dans lequel un élément chauffant (19) est intégré dans l'unité d'enregistrement d'images (12), lequel est commandé par l'unité d'alimentation (14) et est couplé à des composants de détermination de la température et/ou à des composants de commande du véhicule (18).

10. Système de remplacement de rétroviseur (150) selon l'une quelconque des revendications précédentes, dans lequel l'unité d'alimentation (14) est couplée à des composants fonctionnels du véhicule.

11. Système de remplacement de rétroviseur (150) selon la revendication 10, dans lequel les composants fonctionnels du véhicule, l'unité d'alimentation (14) et l'unité d'enregistrement d'images (12) sont disposés dans un boîtier commun (11).

12. Système de remplacement de rétroviseur (150) selon l'une quelconque des revendications précédentes, dans lequel l'unité d'alimentation (14) est couplée à l'unité de reproduction (23) et transmet des données vidéo traitées par l'unité d'alimentation (14) et/ou l'unité d'enregistrement d'images (12) à l'unité de reproduction (23).

13. Système de remplacement de rétroviseur (150) selon l'une quelconque des revendications précédentes, dans lequel l'unité d'enregistrement d'images (12) est un capteur d'images numérique.
